# EUROPEAN PATENT APPLICATION

(11) **EP 4 717 473 A1**
(43) Date of publication of application: **01.04.2026**
(21) Application number: 25197816.9
(22) Date of filing: 25.08.2025
(51) Int. Cl.: B60C 23/06

(54) **TIRE DEFLATION DETERMINATION SYSTEM, TIRE DEFLATION DETERMINATION METHOD, AND PROGRAM**

(30) Priority: 25.09.2024 JP 2024166502
(71) Applicant: SUMITOMO RUBBER INDUSTRIES, LTD., Kobe-shi, Hyogo 651-0072 (JP)
(72) Inventor: OKAWA, Ryuichi, Chuo-ku, Kobe-shi, Hyogo, 651-0072 (JP)
(74) Representative: TBK

(57) **Abstract**

A tire deflation determination system includes: a first acquisition processing unit 51A configured to acquire a rotation speed of each tire mounted on a vehicle 1A; a second acquisition processing unit 54A configured to acquire a resonance frequency of the tire, based on the acquired rotation speed; a replacement determination processing unit 58A configured to determine whether or not a difference between the acquired resonance frequency and a reference frequency exceeds a first determination value; and a change processing unit 59 configured to, if it is determined that the difference between the resonance frequency and the reference frequency exceeds the first determination value, change a threshold value used in a deflation determination process of determining whether or not the tire has become deflated.

## Description

### BACKGROUND OF THE INVENTION

### Field of the Invention

The present disclosure relates to a tire deflation determination system, a tire deflation determination method, and a program.

### Background Art

A tire deflation determination system that can determine whether or not each pneumatic tire mounted on a vehicle has become deflated, based on the rotation speed of the pneumatic tire, has been known. For example, a tire deflation determination system that acquires the resonance frequency of the pneumatic tire, based on the rotation speed acquired while the vehicle is traveling, and determines that the pneumatic tire has become deflated, if the acquired resonance frequency is less than a preset threshold value, has been known (see Japanese Laid-Open Patent Publication No. 2014-95609).

Meanwhile, in the vehicle, the type of pneumatic tire may be changed due to replacement of the pneumatic tire. That is, a pneumatic tire of a type different from the previous pneumatic tire may be mounted to the vehicle. Here, in the tire deflation determination system, even after the type of pneumatic tire is changed, if the same threshold value is used to execute determination as to deflation of the pneumatic tire, the accuracy of determination as to deflation of the pneumatic tire decreases.

An object of the present disclosure is to provide a tire deflation determination system, a tire deflation determination method, and a program with which it is possible to suppress a decrease in the accuracy of determination as to deflation of a pneumatic tire due to change of the type of pneumatic tire.

### SUMMARY OF THE INVENTION

A tire deflation determination system according to an aspect of the present disclosure includes a first acquisition processing unit, a second acquisition processing unit, a determination processing unit, and a change processing unit. The first acquisition processing unit is configured to acquire a rotation speed of each pneumatic tire mounted on a vehicle. The second acquisition processing unit is configured to acquire a resonance frequency of the pneumatic tire, based on the rotation speed acquired by the first acquisition processing unit. The determination processing unit is configured to determine whether or not a difference between the resonance frequency acquired by the second acquisition processing unit and a preset reference frequency exceeds a first determination value. The change processing unit is configured to, if it is determined by the determination processing unit that the difference between the resonance frequency and the reference frequency exceeds the first determination value, change a set value used in a deflation determination process of determining whether or not the pneumatic tire has become deflated based on the rotation speed acquired by the first acquisition processing unit.

With this tire deflation determination system, by setting the resonance frequency when the air pressure of the pneumatic tire is normal as the reference frequency in advance, when the resonance frequency when the air pressure of the pneumatic tire is normal has changed due to change of the type of pneumatic tire, it is possible to detect this change and change the set value. Therefore, it is possible to suppress a decrease in the accuracy of determination as to deflation of the pneumatic tire due to change of the type of pneumatic tire.

According to the present disclosure, it is possible to suppress a decrease in the accuracy of determination as to deflation of the pneumatic tire due to change of the type of pneumatic tire.

### BRIEF DESCRIPTION OF THE DRAWINGS

FIG. 1 illustrates the configuration of a tire deflation determination system according to a first embodiment of the present disclosure;
FIG. 2 illustrates the configuration of a vehicle of the tire deflation determination system according to the first embodiment of the present disclosure;
FIG. 3 illustrates the configuration of a server of the tire deflation determination system according to the first embodiment of the present disclosure;
FIG. 4 is a flowchart showing an example of a tire air pressure monitoring process executed by the tire deflation determination system according to the first embodiment of the present disclosure;
FIG. 5 is a flowchart showing an example of a first threshold value change process executed by the tire deflation determination system according to the first embodiment of the present disclosure;
FIG. 6 illustrates the configuration of a tire deflation determination system according to a second embodiment of the present disclosure;
FIG. 7 illustrates the configuration of a vehicle of the tire deflation determination system according to the second embodiment of the present disclosure; and
FIG. 8 is a flowchart showing an example of a second threshold value change process executed by the tire deflation determination system according to the second embodiment of the present disclosure.

### DETAILED DESCRIPTION

Hereinafter, embodiments of the present disclosure will be described with reference to the accompanying drawings. The following embodiments are examples in which the present disclosure is embodied, and do not limit the technical scope of the present disclosure.

### [First Embodiment]

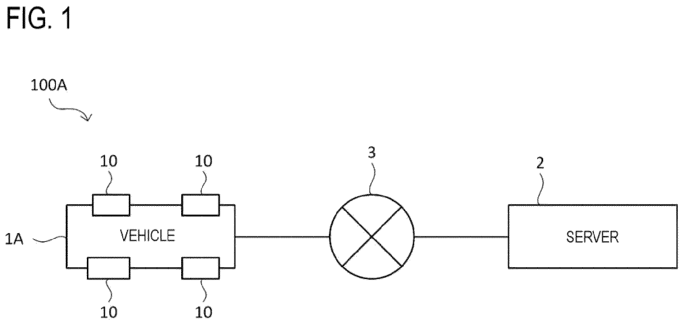

First, the configuration of a tire deflation determination system 100A according to a first embodiment of the present disclosure will be described with reference to FIG. 1.

The tire deflation determination system 100A is capable of determining whether or not a pneumatic tire 10 (see FIG. 1) (hereinafter referred to as "tire 10") mounted on a vehicle 1A (see FIG. 1) has become deflated.

In the tire deflation determination system 100A, if the air pressure of the tire 10 is reduced by a reference pressure loss amount determined in advance from a predetermined optimum value, it is determined that the tire 10 has become deflated. For example, the reference pressure loss amount is 20 percent of the optimum value.

As shown in FIG. 1, the tire deflation determination system 100A includes the vehicle 1A and a server 2. In the tire deflation determination system 100A, the vehicle 1A and the server 2 are connected to each other via a communication network 3 so as to be able to communicate with each other. For example, the communication network 3 is the Internet. The tire deflation determination system 100A of the present disclosure may be composed only of the vehicle 1A.

### [Configuration of Vehicle 1A]

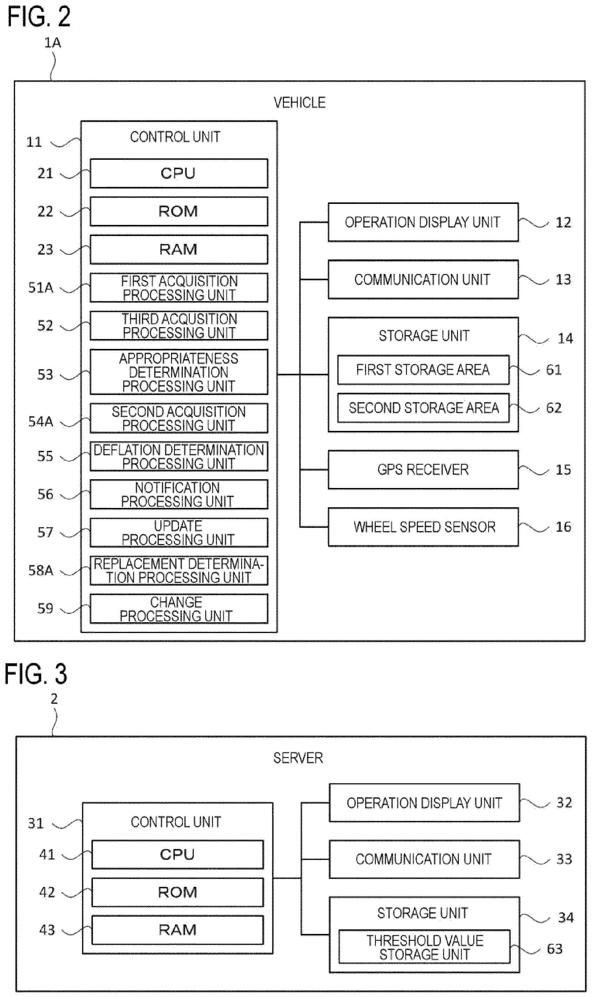

Next, the configuration of the vehicle 1A will be described with reference to FIG. 2.

The vehicle 1A is an automobile such as a passenger car, a bus, or a truck. The vehicle 1A is not limited to the automobile and may be a motorcycle, a three-wheeled passenger car, or the like.

The vehicle 1A includes four tires 10 (see FIG. 1). Specifically, each tire 10 is an OE (original equipment) tire that is originally mounted on the vehicle 1A.

In addition to various components required for traveling such as an engine, a plurality of wheels, the tires 10 (see FIG. 1) mounted on the respective wheels, brakes, and a steering mechanism, the vehicle 1A includes a control unit 11, an operation display unit 12, a communication unit 13, a storage unit 14, a GPS receiver 15, and a wheel speed sensor 16 shown in FIG. 2.

The control unit 11 centrally controls the vehicle 1A. As shown in FIG. 2, the control unit 11 includes a CPU 21, a ROM 22, and a RAM 23. The CPU 21 is a processor that executes various arithmetic processes. The ROM 22 is a nonvolatile storage device in which information such as a control program for causing the CPU 21 to execute various processes is stored in advance. The RAM 23 is a volatile or nonvolatile storage device that is used as a temporary storage memory (work area) for various processes executed by the CPU 21. The CPU 21 executes various control programs stored in advance in the ROM 22. Accordingly, the CPU 21 centrally controls the vehicle 1A.

The operation display unit 12 includes a first display section and a first operation section. The first display section displays various kinds of information in response to control instructions from the control unit 11. For example, the first display section is a flat panel display such as a liquid crystal display. The first operation section inputs various kinds of information into the control unit 11 in response to operations by a user. For example, the first operation section includes an operation key and a touch panel.

The communication unit 13 is a communication interface capable of executing data communication with external devices. Specifically, the communication unit 13 executes data communication with the server 2 via the communication network 3.

The storage unit 14 is a nonvolatile storage device. For example, the storage unit 14 is a nonvolatile memory such as a flash memory.

Map data for a predetermined specific region is stored in the storage unit 14. The map data is used in a searching process of searching for a traveling route from the current position of the vehicle 1A to a destination set by the driver of the vehicle 1A or the like. The searching process is executed by the control unit 11. The specific region may be a region including a plurality of countries, may be a country, or may be a region included in a country.

The GPS receiver 15 is capable of receiving radio waves transmitted from GPS satellites. The control unit 11 is capable of acquiring vehicle position information indicating the current position of the vehicle 1A, based on information included in radio waves received by the GPS receiver 15.

The wheel speed sensor 16 is a sensor capable of detecting the rotation speed of the wheel (rotation speed of the tire 10). The wheel speed sensor 16 is provided for each of the wheels. Each wheel speed sensor 16 outputs a wheel speed signal corresponding to the rotation speed of the wheel. The wheel speed signal outputted from each wheel speed sensor 16 is inputted into the control unit 11.

### [Configuration of Server 2]

Next, the configuration of the server 2 will be described with reference to FIG. 3.

As shown in FIG. 3, the server 2 includes a control unit 31, an operation display unit 32, a communication unit 33, and a storage unit 34.

The control unit 31 centrally controls the server 2. As shown in FIG. 3, the control unit 31 includes a CPU 41, a ROM 42, and a RAM 43. The CPU 41 is a processor that executes various arithmetic processes. The ROM 42 is a nonvolatile storage device in which information such as control programs for causing the CPU 41 to execute various processes is stored in advance. The RAM 43 is a volatile or nonvolatile storage device that is used as a temporary storage memory (work area) for various processes executed by the CPU 41. The CPU 41 executes various control programs stored in advance in the ROM 42. Accordingly, the CPU 41 centrally controls the server 2.

The operation display unit 32 is a user interface of the server 2. The operation display unit 32 includes a second display section and a second operation section. The second display section displays various kinds of information in response to control instructions from the control unit 31. For example, the second display section is a flat panel display such as a liquid crystal display. The second operation section inputs various kinds of information into the control unit 31 in response to operations of the user. For example, the second operation section includes a keyboard, a mouse, and a touch panel.

The communication unit 33 is a communication interface capable of executing data communication with external apparatuses. Specifically, the communication unit 33 executes data communication with the vehicle 1A via the communication network 3.

The storage unit 34 is a nonvolatile storage device. For example, the storage unit 34 is a storage device, such as a nonvolatile memory such as a flash memory, a solid state drive (SSD), and a hard disk drive (HDD).

### [Configuration of Control Unit 11]

Next, the configuration of the control unit 11 of the vehicle 1A will be described in more detail with reference to FIG. 2.

As shown in FIG. 2, the control unit 11 includes a first acquisition processing unit 51A, a third acquisition processing unit 52, an appropriateness determination processing unit 53, a second acquisition processing unit 54A, a deflation determination processing unit 55, a notification processing unit 56, an update processing unit 57, a replacement determination processing unit 58A (an example of a determination processing unit of the present invention), and a change processing unit 59.

Specifically, a tire deflation determination program for causing the control unit 11 to function as each processing unit shown in FIG. 2 is stored in advance in the storage unit 14 of the vehicle 1A. The CPU 21 of the control unit 11 functions as each of the above-described processing units by executing the tire deflation determination program.

Some or all of the processing units included in the control unit 11 may be composed of an electronic circuit. The tire deflation determination program may be a program for causing a plurality of processors to function as each processing unit shown in FIG. 2.

The first acquisition processing unit 51A acquires the rotation speed of the tire 10 mounted on the vehicle 1A.

For example, the first acquisition processing unit 51A acquires the rotation speed of the tire 10 each time a predetermined first determination timing arrives. For example, the first determination timing is a timing that arrives at a predetermined cycle from the start of travel of the vehicle 1A. For example, the cycle is a time that is set as desired between 1 second and 10 minutes.

In addition, the first acquisition processing unit 51A acquires the rotation speed of the tire 10 when a predetermined specific operation is accepted. For example, the specific operation is an operation by the user on a specific button included in the operation display unit 12.

For example, based on the wheel speed signal outputted from the wheel speed sensor 16, the first acquisition processing unit 51A acquires the rotation speed of the tire 10 corresponding to the wheel speed sensor 16.

For example, when the first determination timing arrives, the first acquisition processing unit 51A continuously acquires the rotation speed of the tire 10 until a predetermined acquisition time has elapsed. That is, during a period from the arrival of the first determination timing to the elapse of the acquisition time, each time the wheel speed signal is outputted from the wheel speed sensor 16, the first acquisition processing unit 51A acquires the rotation speed of the tire 10. For example, the acquisition time is 10 seconds. The rotation speeds of the plurality of tires 10 acquired during the acquisition time are used for calculating an estimated resonance frequency value for the tire 10.

In addition, when the specific operation is accepted, the first acquisition processing unit 51A continuously acquires the rotation speed of the tire 10 until a predetermined learning time has elapsed. For example, the learning time is a time that is set as desired between 30 minutes and 5 hours. The rotation speeds of the plurality of tires 10 acquired during the learning time are used for learning a reference frequency described later.

The third acquisition processing unit 52 acquires traveling status information regarding the traveling status of the vehicle 1A at the time when the rotation speed of each tire 10 is acquired by the first acquisition processing unit 51A.

For example, the traveling status information includes speed information, speed change information, steering angle information, yaw rate information, road surface information, gradient information, and weather information. The speed information is information indicating the traveling speed of the vehicle 1A. The speed change information is information indicating the acceleration or deceleration of the vehicle 1A. The steering angle information is information indicating a steering angle, which is the rotation angle of the steering wheel of the vehicle 1A. The yaw rate information is information indicating a yaw rate, which is the rotational angular velocity of the vehicle 1A about a vertical axis that passes through the center of gravity of the vehicle 1A. The road surface information is information indicating the type of a road surface on which the vehicle 1A is traveling. The gradient information is information indicating the gradient of the road surface on which the vehicle 1A is traveling. The weather information is information indicating the weather at the location where the vehicle 1A is traveling.

For example, the third acquisition processing unit 52 acquires the speed information using the wheel speed sensor 16 corresponding to each wheel. In addition, the third acquisition processing unit 52 acquires the speed change information, based on a result of detection of the number of revolutions of the engine by an engine revolution sensor (not shown) and the presence or absence of output of a brake signal outputted when the brakes are applied. Furthermore, the third acquisition processing unit 52 acquires the steering angle information using a steering angle sensor (not shown) provided on the steering shaft of the steering wheel. Furthermore, the third acquisition processing unit 52 acquires the yaw rate information using a yaw rate sensor (not shown). Furthermore, the third acquisition processing unit 52 acquires the road surface information and the gradient information, based on the vehicle position information acquired using the GPS receiver 15 and the map data stored in the storage unit 14. Furthermore, the third acquisition processing unit 52 acquires the weather information acquired by a weather observation system closest to the current position of the vehicle 1A, from a website that provides the weather information.

Based on the traveling status information acquired by the third acquisition processing unit 52, the appropriateness determination processing unit 53 determines whether or not it is appropriate to acquire the resonance frequency of the tire 10 using the rotation speed of the tire 10 acquired by the first acquisition processing unit 51A.

For example, if the traveling speed of the vehicle 1A at the time when the rotation speed of the tire 10 is acquired by the first acquisition processing unit 51A is not included in a predetermined speed range, the appropriateness determination processing unit 53 determines that it is inappropriate to acquire the resonance frequency of the tire 10 using the rotation speed. For example, the speed range is a range of 50 kilometers per hour or more and 100 kilometers per hour or less.

In addition, if the acceleration of the vehicle 1A exceeds a predetermined value or the deceleration of the vehicle 1A exceeds a predetermined value when the rotation speed of the tire 10 is acquired by the first acquisition processing unit 51A, the appropriateness determination processing unit 53 determines that it is inappropriate to acquire the resonance frequency of the tire 10 using the rotation speed.

In addition, if the steering angle at the time when the rotation speed of the tire 10 is acquired by the first acquisition processing unit 51A is not included in a predetermined angle range centered at 0 degrees, the appropriateness determination processing unit 53 determines that it is inappropriate to acquire the resonance frequency of the tire 10 using the rotation speed. For example, the angle range is a range of minus 5 degrees or more and 5 degrees or less.

In addition, if the yaw rate at the time when the rotation speed of the tire 10 is acquired by the first acquisition processing unit 51A exceeds a predetermined value, the appropriateness determination processing unit 53 determines that it is inappropriate to acquire the resonance frequency of the tire 10 using the rotation speed.

In addition, if the vehicle 1A is travelling on a predetermined specific road surface different from a paved road surface when the rotation speed of the tire 10 is acquired by the first acquisition processing unit 51A, the appropriateness determination processing unit 53 determines that it is inappropriate to acquire the resonance frequency of the tire 10 using the rotation speed.

In addition, if the vehicle 1A is traveling on a road surface having a gradient exceeding a predetermined upper limit angle when the rotation speed of the tire 10 is acquired by the first acquisition processing unit 51A, the appropriateness determination processing unit 53 determines that it is inappropriate to acquire the resonance frequency of the tire 10 using the rotation speed. For example, the upper limit angle is 5 degrees.

In addition, if the vehicle 1A is traveling at a location where it is raining or snowing and the rainfall or snowfall exceeds a predetermined value when the rotation speed of the tire 10 is acquired by the first acquisition processing unit 51A, the appropriateness determination processing unit 53 determines that it is inappropriate to acquire the resonance frequency of the tire 10 using the rotation speed.

Furthermore, if it is not determined that it is inappropriate based on the speed information, the speed change information, the steering angle information, the yaw rate information, the road surface information, the gradient information, and the weather information, the appropriateness determination processing unit 53 determines that it is appropriate to acquire the resonance frequency of the tire 10 using the rotation speed of the tire 10 acquired by the first acquisition processing unit 51A.

Based on the rotation speed of the tire 10 acquired by the first acquisition processing unit 51A, the second acquisition processing unit 54A acquires the resonance frequency of the tire 10.

Here, based on the rotation speed that is determined to be appropriate based on the traveling status information acquired by the third acquisition processing unit 52 among the rotation speeds of the tires 10 acquired by the first acquisition processing unit 51A, the second acquisition processing unit 54A acquires the resonance frequency of the tire 10. Accordingly, it is possible to avoid acquiring the resonance frequency of the tire 10 based on the rotation speed of the tire 10 acquired in a traveling status that is not suitable for acquiring the resonance frequency of the tire 10.

For example, each time the first determination timing arrives, based on the rotation speed of the tire 10 acquired in response to the arrival of the first determination timing, the second acquisition processing unit 54A acquires the resonance frequency of the tire 10. Specifically, the second acquisition processing unit 54A acquires the resonance frequency of the tire 10, based on the rotation speeds of the plurality of tires 10 acquired during the acquisition time.

In addition, when the specific operation is accepted, the second acquisition processing unit 54A acquires the resonance frequency of the tire 10, based on the rotation speed of the tire 10 acquired in response to the acceptance of the specific operation. Specifically, the second acquisition processing unit 54A acquires the resonance frequencies of the plurality of tires 10, based on the rotation speeds of the plurality of tires 10 acquired during the learning time.

A known method may be used as a method for acquiring the resonance frequency of the tire 10 by the second acquisition processing unit 54A. For example, the second acquisition processing unit 54A can calculate an estimated resonance frequency value for the tire 10 by performing time series analysis, based on a second-order autoregressive (AR) model, on rotational acceleration information calculated from the rotation speed of the tire 10 acquired by the first acquisition processing unit 51A.

Meanwhile, the resonance frequency of the tire 10 may vary depending on the traveling speed of the vehicle 1A. In response to this, in the vehicle 1A, the acquired resonance frequency of the tire 10 is corrected based on the traveling speed of the vehicle 1A.

For example, a relational expression indicating the relationship between the traveling speed of the vehicle 1A and a correction value for the resonance frequency of the tire 10 is stored in advance in the storage unit 14. The relational expression is defined such that the correction value becomes zero when the traveling speed of the vehicle 1A is a predetermined reference speed. For example, the relational expression is a linear function. The relational expression can be acquired by conducting an experiment, using an experimental vehicle on which the OE tires are mounted, for investigating the relationship between the traveling speed of the experimental vehicle and the resonance frequency of each OE tire. The experimental vehicle is the same type of vehicle as the vehicle 1A.

The second acquisition processing unit 54A acquires the correction value by substituting the traveling speed of the vehicle 1A at the time when the resonance frequency of the tire 10 is acquired into the relational expression, and corrects the resonance frequency of the tire 10 by adding the acquired correction value to the resonance frequency of the tire 10.

The deflation determination processing unit 55 executes a deflation determination process of determining whether or not the tire 10 has become deflated, based on the rotation speed of the tire 10 acquired by the first acquisition processing unit 51A.

Specifically, in the deflation determination process, if the difference between the resonance frequency based on the rotation speed of the tire 10 acquired by the first acquisition processing unit 51A, that is, the resonance frequency of the tire 10 acquired by the second acquisition processing unit 54A, and a preset reference frequency exceeds a preset threshold value, it is determined that the tire 10 has become deflated.

Here, the reference frequency is the resonance frequency of the tire 10 when the air pressure of the tire 10 is the optimum value. The reference frequency is updated by the update processing unit 57. The initial value of the reference frequency is the initial frequency of the OE tire. The initial frequency of the OE tire is the resonance frequency of the OE tire when the air pressure of the OE tire that is new is the optimum value.

Here, a method for calculating the threshold value will be described.

The threshold value is calculated based on a result of an experiment conducted using the experimental vehicle for investigating the deflation sensitivity of the OE tire. Here, the deflation sensitivity of the OE tire is a value indicating an amount of decrease in the resonance frequency of the OE tire when the air pressure of the OE tire has decreased by a unit amount (e.g., 1 percent of the optimum value).

Specifically, the threshold value is calculated by multiplying the deflation sensitivity of the OE tire by the reference pressure loss amount.

For example, in the vehicle 1A, the pre-calculated threshold value is stored in advance in a first storage area 61 (see FIG. 2) of the storage unit 14.

The deflation determination processing unit 55 executes the deflation determination process using the threshold value stored in the first storage area 61.

If it is determined in the deflation determination process that the tire 10 has become deflated, the notification processing unit 56 notifies that the tire 10 has become deflated.

For example, the notification processing unit 56 displays a message indicating that there is a tire 10 that has been deflated and including information indicating the position of the tire 10 that has been deflated, on the operation display unit 12.

If it is determined in the deflation determination process that the tire 10 has not become deflated, the notification processing unit 56 may count down a count value whose lower limit is zero, and if it is determined in the deflation determination process that the tire 10 has become deflated, the notification processing unit 56 may count up the count value. If the count value reaches a predetermined value, the notification processing unit 56 may notify that the tire 10 has become deflated.

Based on the resonance frequency of the tire 10 acquired in response to the acceptance of the specific operation, the update processing unit 57 updates the reference frequency.

The reference frequency is updated when the air pressure of the tire 10 is adjusted or the tire 10 is replaced. That is, in the vehicle 1A, the specific operation is performed by the driver of the vehicle 1A when the air pressure of the tire 10 is adjusted or the tire 10 is replaced.

For example, when the resonance frequencies of the plurality of tires 10 are acquired in response to the acceptance of the specific operation, the update processing unit 57 stores the average value of the acquired resonance frequencies of the plurality of tires 10 as a new reference frequency in a second storage area 62 of the storage unit 14. In other words, the control unit 11 learns the reference frequency, based on the resonance frequencies of the plurality of tires 10 acquired in response to the acceptance of the specific operation.

Meanwhile, in the vehicle 1A, the type of tire 10 may be changed due to replacement of the tire 10. That is, a tire 10 (replacement tire) of a type different from that of the previous tire 10 (OE tire) may be mounted to the vehicle 1A.

Here, in the tire deflation determination system 100A, even after the type of tire 10 is changed, if the same threshold value is used to execute determination as to deflation of the tire 10, the accuracy of determination as to deflation of the tire 10 decreases. This is because the deflation sensitivity used for calculating the threshold value is different for each type of tire 10.

In contrast, in the tire deflation determination system 100A according to the embodiment of the present disclosure, it is possible to suppress a decrease in the accuracy of determination as to deflation of the tire 10 due to change of the type of tire 10 as described below.

The replacement determination processing unit 58A determines whether or not the difference between the resonance frequency of the tire 10 acquired by the second acquisition processing unit 54A and the reference frequency exceeds a preset first determination value.

For example, the first determination value is set to a value that is larger than the variation in the initial frequencies of the plurality of OE tires.

For example, when the specific operation is accepted, the replacement determination processing unit 58A determines whether or not the difference between the reference frequency after update by the update processing unit 57 and the reference frequency before the update exceeds the first determination value.

The first determination value may be a value obtained by multiplying the reference frequency by a predetermined ratio (e.g., 5 percent).

If it is determined by the replacement determination processing unit 58A that the difference between the resonance frequency of the tire 10 and the reference frequency exceeds the first determination value, the change processing unit 59 changes the threshold value (an example of a set value of the present invention) used in the deflation determination process.

For example, if it is determined by the replacement determination processing unit 58A that the difference between the resonance frequency of the tire 10 and the reference frequency exceeds the first determination value, the change processing unit 59 changes the threshold value to a value based on the highest deflation sensitivity among a plurality of deflation sensitivities corresponding to a plurality of tire types.

For example, the storage unit 34 of the server 2 is provided with a threshold value storage unit 63 shown in FIG. 3.

In the threshold value storage unit 63, a plurality of threshold values corresponding to the plurality of tire types are stored. The deflation sensitivity corresponding to each of the tire types can be acquired by preparing a plurality of tires that have the same size as the OE tire and whose tire types are different from each other, mounting each prepared tire on a vehicle of the same type as the vehicle 1A, and conducting an experiment for investigating the resonance frequency (initial frequency) when the air pressure is the optimum value and the resonance frequency when the air pressure is an abnormal value (e.g., 80 percent of the optimum value). Furthermore, the threshold value corresponding to each of the tire types can be calculated based on the deflation sensitivity corresponding to each of the tire types and the reference pressure loss amount.

The change processing unit 59 acquires the largest threshold value among the plurality of threshold values corresponding to the plurality of tire types and stored in the threshold value storage unit 63 of the server 2, from the threshold value storage unit 63.

The change processing unit 59 stores the threshold value acquired from the threshold value storage unit 63, as a new threshold value, in the first storage area 61 of the storage unit 14.

If it is determined by the replacement determination processing unit 58A that the difference between the resonance frequency of the tire 10 and the reference frequency exceeds the first determination value, the change processing unit 59 may set the average value of the plurality of threshold values corresponding to the plurality of tire types, as a new threshold value.

### [Tire Air Pressure Monitoring Process]

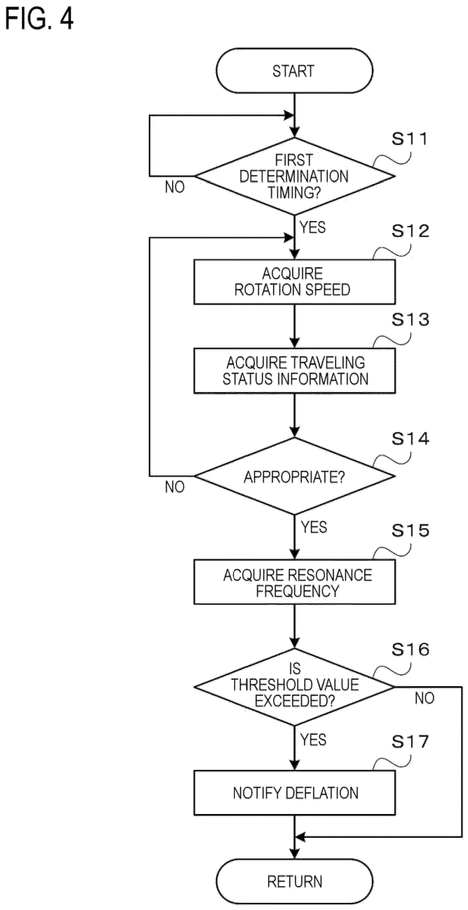

Hereinafter, an example of the procedure for a tire air pressure monitoring process executed by the control unit 11 of the vehicle 1A will be described with reference to FIG. 4. Here, steps S11, S12 ... represent numbers of the processing procedure (steps) executed by the control unit 11. The tire air pressure monitoring process is executed while the vehicle 1A is traveling. In addition, the tire air pressure monitoring process is executed for each tire 10.

### <Step S11>

First, in step S11, the control unit 11 determines whether or not the first determination timing has arrived.

Here, if the control unit 11 determines that the first determination timing has arrived (Yes side in S11), the control unit 11 shifts the process to step S12. If the first determination timing has not arrived (No side in S11), the control unit 11 waits for the arrival of the first determination timing in step S11.

### <Step S12>

In step S12, the control unit 11 acquires the rotation speed of the tire 10. The processes in step S11 and step S12 are executed by the first acquisition processing unit 51A of the control unit 11.

Specifically, the control unit 11 acquires the rotation speed of the tire 10 using the wheel speed sensor 16. In addition, the control unit 11 continuously acquires the rotation speed of the tire 10 until the acquisition time has elapsed.

### <Step S13>

In step S13, the control unit 11 acquires the traveling status information. The process in step S13 is executed by the third acquisition processing unit 52 of the control unit 11.

Specifically, the control unit 11 acquires the speed information using the wheel speed sensor 16 corresponding to each wheel. In addition, the control unit 11 acquires the speed change information, based on a result of detection of the number of revolutions of the engine by the engine revolution sensor and the presence or absence of a brake signal. Furthermore, the control unit 11 acquires the steering angle information using the steering angle sensor. Furthermore, the control unit 11 acquires the yaw rate information using the yaw rate sensor. Furthermore, the control unit 11 acquires the road surface information and the gradient information, based on the vehicle position information acquired using the GPS receiver 15 and the map data stored in the storage unit 14. Furthermore, the control unit 11 acquires the weather information acquired by the weather observation system closest to the current position of the vehicle 1A, from the above website.

### <Step S14>

In step S14, based on the traveling status information acquired through the process in step S13, the control unit 11 determines whether or not it is appropriate to acquire the resonance frequency of the tire 10 using the rotation speed of the tire 10 acquired through the process in step S12. The process in step S14 is executed by the appropriateness determination processing unit 53 of the control unit 11.

Specifically, if the speed information acquired through the process in step S13 indicates a speed outside the speed range, the control unit 11 determines that it is inappropriate to acquire the resonance frequency of the tire 10 using the rotation speed of the tire 10 acquired through the process in step S12.

In addition, if, based on the speed change information acquired through the process in step S13, it is determined that the acceleration of the vehicle 1A exceeds the predetermined value or the deceleration of the vehicle 1A exceeds the predetermined value, the control unit 11 determines that it is inappropriate to acquire the resonance frequency of the tire 10 using the rotation speed of the tire 10 acquired through the process in step S12.

In addition, if the steering angle information acquired through the process in step S13 indicates an angle outside the angle range, the control unit 11 determines that it is inappropriate to acquire the resonance frequency of the tire 10 using the rotation speed of the tire 10 acquired through the process in step S12.

In addition, if, based on the yaw rate information acquired through the process in step S13, it is determined that the yaw rate exceeds the predetermined value, the control unit 11 determines that it is inappropriate to acquire the resonance frequency of the tire 10 using the rotation speed of the tire 10 acquired through the process in step S12.

In addition, if the road surface information acquired through the process in step S13 indicates the specific road surface, the control unit 11 determines that it is inappropriate to acquire the resonance frequency of the tire 10 using the rotation speed of the tire 10 acquired through the process in step S12.

In addition, if the gradient information acquired through the process in step S13 indicates an angle that is larger than the upper limit angle, the control unit 11 determines that it is inappropriate to acquire the resonance frequency of the tire 10 using the rotation speed of the tire 10 acquired through the process in step S12.

In addition, if the weather information acquired through the process in step S13 indicates rain or snow and the rainfall or snowfall exceeds the predetermined value, the control unit 11 determines that it is inappropriate to acquire the resonance frequency of the tire 10 using the rotation speed of the tire 10 acquired through the process in step S12.

In addition, if, based on the traveling status information acquired through the process in step S13, it is not determined that it is inappropriate, the control unit 11 determines that it is appropriate to acquire the resonance frequency of the tire 10 using the rotation speed of the tire 10 acquired through the process in step S12.

Here, if the control unit 11 determines that it is appropriate to acquire the resonance frequency of the tire 10 using the rotation speed of the tire 10 acquired through the process in step S12 (Yes side in S14), the control unit 11 shifts the process to step S15. If it is not appropriate to acquire the resonance frequency of the tire 10 using the rotation speed of the tire 10 acquired through the process in step S12 (No side in S14), the control unit 11 shifts the process to step S12.

### <Step S15>

In step S15, the control unit 11 acquires the resonance frequency of the tire 10, based on the rotation speed of the tire 10 acquired through the process in the immediately preceding step S12. The process in step S15 is executed by the second acquisition processing unit 54A of the control unit 11.

Specifically, the control unit 11 calculates an estimated resonance frequency value for the tire 10 by performing time series analysis, based on a second-order autoregressive (AR) model, on rotational acceleration information calculated from the rotation speed of the tire 10 acquired through the process in the immediately preceding step S12.

In addition, the control unit 11 acquires the correction value by substituting the traveling speed of the vehicle 1A acquired through the process in step S13 into the relational expression, and corrects the resonance frequency of the tire 10 by adding the acquired correction value to the resonance frequency of the tire 10.

### <Step S16>

In step S16, the control unit 11 determines whether or not the difference between the resonance frequency of the tire 10 acquired through the process in step S15 and the reference frequency stored in the second storage area 62 of the storage unit 14 exceeds the threshold value stored in the first storage area 61 of the storage unit 14. The process in step S16 is executed by the deflation determination processing unit 55 of the control unit 11.

Here, if the control unit 11 determines that the difference between the resonance frequency of the tire 10 acquired in step S15 and the reference frequency exceeds the threshold value (Yes side in S16), the control unit 11 shifts the process to step S17. If the difference between the resonance frequency of the tire 10 acquired in step S15 and the reference frequency does not exceed the threshold value (No side in S16), the control unit 11 shifts the process to step S11.

### <Step S17>

In step S17, the control unit 11 notifies that the tire 10 has become deflated. The process in step S17 is executed by the notification processing unit 56 of the control unit 11.

Specifically, the control unit 11 displays a message indicating that there is a tire 10 that has been deflated and including information indicating the position of the tire 10 that has been deflated, on the operation display unit 12.

### [First Threshold Value Change Process]

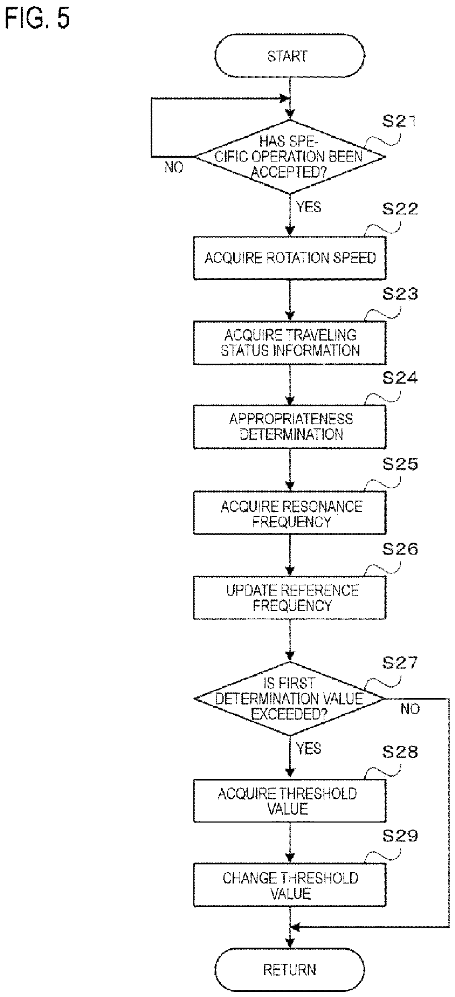

Next, with reference to FIG. 5, a tire deflation determination method of the present disclosure will be described with an example of the procedure for a first threshold value change process executed by the control unit 11 of the vehicle 1A. The first threshold value change process is executed while the vehicle 1A is traveling. In addition, the first threshold value change process is executed for each tire 10.

### <Step S21>

First, in step S21, the control unit 11 determines whether or not the specific operation has been accepted.

Specifically, if an operation by the user on the specific button included in the operation display unit 12 has been accepted, the control unit 11 determines that the specific operation has been accepted.

If the control unit 11 determines that the specific operation has been accepted (Yes side in S21), the control unit 11 shifts the process to step S22. If the specific operation has not been accepted (No side in S21), the control unit 11 waits for the acceptance of the specific operation in step S21.

### <Step S22>

In step S22, the control unit 11 acquires the rotation speed of the tire 10. The processes in step S21 and step S22 are an example of a first acquisition step of the present disclosure and are executed by the first acquisition processing unit 51A of the control unit 11.

Specifically, the control unit 11 continuously acquires the rotation speed of the tire 10 until the learning time has elapsed.

### <Step S23>

In step S23, the control unit 11 acquires the traveling status information. For example, the control unit 11 acquires the traveling status information in each of equal division periods into which a period for acquiring the rotation speed of the tire 10 through the process in step S22 is divided. The process in step S23 is executed by the third acquisition processing unit 52 of the control unit 11.

### <Step S24>

In step S24, based on the traveling status information acquired through the process in step S23, the control unit 11 determines whether or not it is appropriate to acquire the resonance frequency of the tire 10 using the rotation speed of the tire 10 acquired through the process in step S22. For example, for each of the division periods, based on the traveling status information acquired during the division period, the control unit 11 determines whether or not it is appropriate to acquire the resonance frequency of the tire 10 using the rotation speed of the tire 10 acquired during this division period. The process in step S24 is executed by the appropriateness determination processing unit 53 of the control unit 11.

### <Step S25>

In step S25, the control unit 11 acquires the resonance frequency of the tire 10, based on the rotation speed of the tire 10 acquired through the process in step S22. For example, for each division period for which it is determined in the process in step S24 that it is appropriate to acquire the resonance frequency of the tire 10, the control unit 11 acquires the resonance frequency of the tire 10, based on the rotation speed of the tire 10 acquired during this division period. The process in step S25 is an example of a second acquisition step of the present disclosure and is executed by the second acquisition processing unit 54A of the control unit 11.

### <Step S26>

In step S26, the control unit 11 updates the reference frequency. The process in step S26 is executed by the update processing unit 57 of the control unit 11.

For example, the control unit 11 stores the average value of the resonance frequencies of the plurality of tires 10 acquired through the process in step S25, as a new reference frequency, in the second storage area 62 of the storage unit 14.

### <Step S27>

In step S27, the control unit 11 determines whether or not the difference between the reference frequency after the update by the process in step S26 and the reference frequency before the update exceeds the first determination value. The process in step S27 is an example of a determination step of the present disclosure and is executed by the replacement determination processing unit 58A of the control unit 11.

Here, if the control unit 11 determines that the difference between the reference frequency after the update and the reference frequency before the update exceeds the first determination value (Yes side in S27), the control unit 11 shifts the process to step S28. If the difference between the reference frequency after the update and the reference frequency before the update does not exceed the first determination value (No side in S27), the control unit 11 shifts the process to step S21.

### <Step S28>

In step S28, the control unit 11 acquires the largest threshold value among the plurality of threshold values corresponding to the plurality of tire types and stored in the threshold value storage unit 63 of the server 2.

### <Step S29>

In step S29, the control unit 11 changes the threshold value. The processes in step S28 and step S29 are an example of a change step of the present disclosure and are executed by the change processing unit 59 of the control unit 11.

Specifically, the control unit 11 stores the threshold value acquired through the process in step S28, as a new threshold value, in the first storage area 61 of the storage unit 14.

As described above, in the tire deflation determination system 100A, if the difference between the resonance frequency of the tire 10 acquired by the second acquisition processing unit 54A and the reference frequency exceeds the first determination value, the threshold value used in the deflation determination process is changed. Accordingly, by setting the resonance frequency when the air pressure of the tire 10 is normal as the reference frequency in advance, if the resonance frequency when the air pressure of the tire 10 is normal has changed due to change of the type of tire 10, it is possible to detect this change and change the threshold value. Therefore, it is possible to suppress a decrease in the accuracy of determination as to deflation of the tire 10 due to change of the type of tire 10.

### [Second Embodiment]

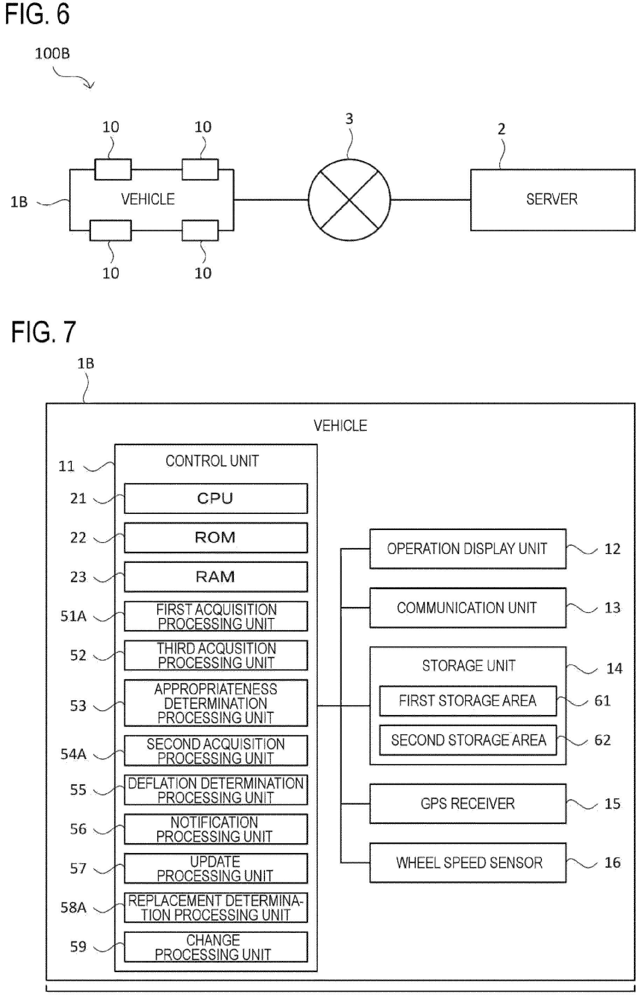

Hereinafter, the configuration of a tire deflation determination system 100B according to a second embodiment of the present disclosure will be described with reference to FIG. 6 and FIG. 7.

As shown in FIG. 1 and FIG. 6, the tire deflation determination system 100B includes the same configuration as the tire deflation determination system 100A, except that a vehicle 1B is included instead of the vehicle 1A. Hereinafter, of the configuration of the tire deflation determination system 100B, only the configuration different from that of the tire deflation determination system 100A will be described.

As shown in FIG. 2 and FIG. 7, the vehicle 1B includes the same configuration as the vehicle 1A, except that a first acquisition processing unit 51B, a second acquisition processing unit 54B, and a replacement determination processing unit 58B are included instead of the first acquisition processing unit 51A, the second acquisition processing unit 54A, and the replacement determination processing unit 58A.

The first acquisition processing unit 51B acquires the rotation speed of the tire 10 each time the first determination timing arrives.

In addition, the first acquisition processing unit 51B acquires the rotation speed of the tire 10 each time a predetermined second determination timing (an example of an acquisition timing of the present disclosure) arrives. For example, the second determination timing is a timing that arrives each time a specific time has elapsed from the start of travel of the vehicle 1A. The specific time is the same as the learning time or longer than the learning time.

Each time the first determination timing arrives, based on the rotation speed of the tire 10 acquired in response to the arrival of the first determination timing, the second acquisition processing unit 54B acquires the resonance frequency of the tire 10.

In addition, each time the second determination timing arrives, based on the rotation speed of the tire 10 acquired in response to the arrival of the second determination timing, the second acquisition processing unit 54B acquires the resonance frequency of the tire 10.

If the resonance frequency of the tire 10 acquired by the second acquisition processing unit 54B at each second determination timing has increased by more than a preset second determination value or has decreased by more than a preset third determination value, the replacement determination processing unit 58B determines whether or not the difference between the last acquired resonance frequency of the tire 10 and the reference frequency exceeds the first determination value.

For example, the second determination value is 10 percent of the threshold value. The third determination value is 50 percent of the threshold value.

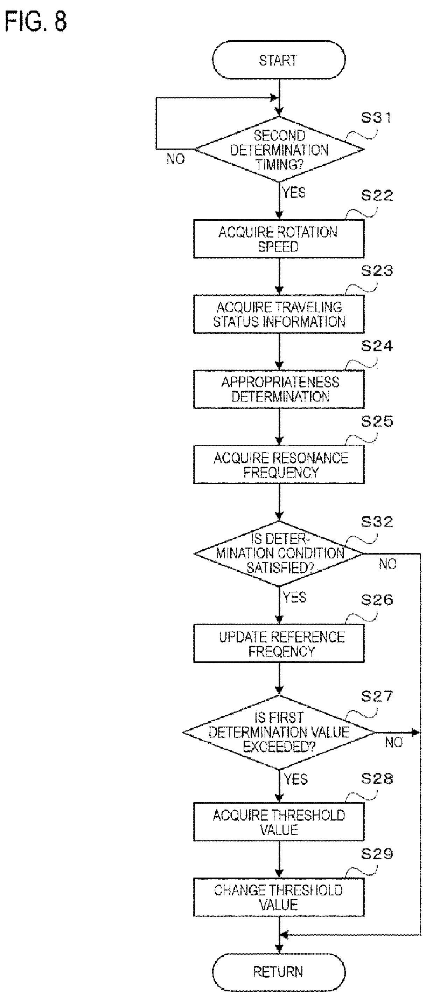

In the vehicle 1B, a second threshold value change process shown in FIG. 8 is executed instead of the first threshold value change process.

### [Second Threshold Value Change Process]

Hereinafter, an example of the procedure for the second threshold value change process executed by the control unit 11 of the vehicle 1B will be described with reference to FIG. 8. The second threshold value change process is executed while the vehicle 1B is traveling. In addition, the second threshold value change process is executed for each tire 10.

As shown in FIG. 5 and FIG. 8, the second threshold value change process includes the same processing content as the first threshold value change process, except that a process in step S31 is executed instead of the process in step S21 and a process in step S32 is executed after the process in step S25.

### <Step S31>

In step S31, the control unit 11 determines whether or not the second determination timing has arrived.

Here, if the control unit 11 determines that the second determination timing has arrived (Yes side in S31), the control unit 11 shifts the process to step S22. If the second determination timing has not arrived (No side in S31), the control unit 11 waits for the arrival of the second determination timing in step S31.

### <Step S32>

In step S32, the control unit 11 determines whether or not a predetermined determination condition is satisfied.

Specifically, if the average value of the resonance frequencies of the plurality of tires 10 acquired through the process in the immediately preceding step S25 has increased from the previous value by more than the second determination value, the control unit 11 determines that the determination condition is satisfied. In addition, if the average value of the resonance frequencies of the plurality of tires 10 acquired through the process in the immediately preceding step S25 has decreased from the previous value by more than the third determination value, the control unit 11 determines that the determination condition is satisfied.

Here, if the control unit 11 determines that the determination condition is satisfied (Yes side in S32), the control unit 11 shifts the process to step S26. If the determination condition is not satisfied (No side in S32), the control unit 11 shifts the process to step S31.

As described above, in the tire deflation determination system 100B, if the resonance frequency of the tire 10 acquired at each second determination timing has increased by more than the second determination value or has decreased by more than the third determination value, it is determined whether or not the difference between the last acquired resonance frequency of the tire 10 (the reference frequency after update) and the reference frequency before the update exceeds the first determination value. Accordingly, if the resonance frequency of the tire 10 has increased due to air injection into the tire 10 or replacement of the tire 10, it is possible to automatically determine whether or not it is necessary to change the threshold value. In addition, if the resonance frequency of the tire 10 has greatly decreased due to replacement of the tire 10, it is possible to automatically determine whether or not it is necessary to change the threshold value. Therefore, compared to the configuration of the tire deflation determination system 100A in which whether or not it is necessary to change the threshold value is determined when the specific operation is accepted, it is possible to eliminate the time and effort required to perform the specific operation.

The deflation determination process may be a process in which, if the resonance frequency of the tire 10 acquired by the second acquisition processing unit 54A is less than a specific value, it is determined that the tire 10 has become deflated. Specifically, the specific value is a value obtained by subtracting the threshold value from the reference frequency.

In this case, if it is determined by the replacement determination processing unit 58A that the difference between the resonance frequency of the tire 10 and the reference frequency exceeds the first determination value, the change processing unit 59 may change the specific value (another example of the set value of the present invention) used in the deflation determination process.

In addition, the change processing unit 59 may change the gradient (another example of the set value of the present invention) of the relational expression used for correcting the resonance frequency of the tire 10, in addition to the threshold value.

For example, a combination of the gradient and the threshold value corresponding to each of the tire types may be stored in advance in the threshold value storage unit 63. Then, the change processing unit 59 may acquire the largest threshold value and the gradient corresponding to this threshold value, from the threshold value storage unit 63, and change the relational expression using the acquired gradient. Moreover, the relational expression may be calculated based on various data such as the rotation speed of each tire 10 acquired while the vehicle 1A (or vehicle 1B) is traveling.

In addition, some of the processing units included in the control unit 11 may be provided in the control unit 31 of the server 2.

Furthermore, the threshold value storage unit 63 may be provided in the storage unit 14 of the vehicle 1A.

The embodiments of the present disclosure described above include disclosure items (1) to (7) described below.

A disclosure item (1) is a tire deflation determination system including: a first acquisition processing unit configured to acquire a rotation speed of each pneumatic tire mounted on a vehicle; a second acquisition processing unit configured to acquire a resonance frequency of the pneumatic tire, based on the rotation speed acquired by the first acquisition processing unit; a determination processing unit configured to determine whether or not a difference between the resonance frequency acquired by the second acquisition processing unit and a preset reference frequency exceeds a preset first determination value; and a change processing unit configured to, if it is determined by the determination processing unit that the difference between the resonance frequency and the reference frequency exceeds the first determination value, change a set value used in a deflation determination process of determining whether or not the pneumatic tire has become deflated based on the rotation speed acquired by the first acquisition processing unit.

With this system, by setting the resonance frequency when the air pressure of the pneumatic tire is normal as the reference frequency in advance, if the resonance frequency when the air pressure of the pneumatic tire is normal has changed due to change of the type of pneumatic tire, it is possible to detect this change and change the set value. Therefore, it is possible to suppress a decrease in the accuracy of determination as to deflation of the pneumatic tire due to change of the type of pneumatic tire.

A disclosure item (2) is the tire deflation determination system according to the disclosure item (1), wherein: the first acquisition processing unit acquires the rotation speed when at least a predetermined specific operation is accepted; when the specific operation is accepted, the second acquisition processing unit acquires the resonance frequency, based on the rotation speed acquired in response to the acceptance of the specific operation; the tire deflation determination system further includes an update processing unit configured to update the reference frequency, based on the resonance frequency acquired in response to the acceptance of the specific operation; and when the specific operation is accepted, the determination processing unit determines whether or not a difference between the reference frequency after update by the update processing unit and the reference frequency before the update exceeds the first determination value.

With this system, it is possible to determine whether or not the type of pneumatic tire has been changed, at the timing when the reference frequency is updated in response to the specific operation.

A disclosure item (3) is the tire deflation determination system according to the disclosure item (1), wherein: the first acquisition processing unit acquires the rotation speed each time a predetermined acquisition timing arrives; each time the acquisition timing arrives, the second acquisition processing unit acquires the resonance frequency, based on the rotation speed acquired in response to the arrival of the acquisition timing; and if the resonance frequency acquired by the second acquisition processing unit at each acquisition timing has increased by more than a preset second determination value or has decreased by more than a preset third determination value, the determination processing unit determines whether or not a difference between the last acquired resonance frequency and the reference frequency exceeds the first determination value.

With this system, it is possible to automatically determine whether or not the type of pneumatic tire has been changed.

A disclosure item (4) is the tire deflation determination system according to any one of the disclosure items (1) to (3), further including a third acquisition processing unit configured to acquire traveling status information regarding a traveling status of the vehicle at a time when the rotation speed is acquired by the first acquisition processing unit, wherein the second acquisition processing unit acquires the resonance frequency, based on the rotation speed that is determined to be appropriate based on the traveling status information acquired by the third acquisition processing unit among the rotation speeds acquired by the first acquisition processing unit.

With this system, it is possible to avoid acquiring the resonance frequency based on the rotation speed acquired in a traveling status that is not suitable for acquiring the resonance frequency.

A disclosure item (5) is the tire deflation determination system according to any one of the disclosure items (1) to (4), wherein: the deflation determination process is a process in which if a difference between the resonance frequency based on the rotation speed acquired by the first acquisition processing unit and the reference frequency exceeds a preset threshold value, it is determined that the pneumatic tire has become deflated; the set value includes the threshold value; and if it is determined by the determination processing unit that the difference between the resonance frequency and the reference frequency exceeds the first determination value, the change processing unit changes the threshold value to a value based on a highest deflation sensitivity among a plurality of deflation sensitivities corresponding to a plurality of tire types.

With this system, a new threshold value is set based on the highest deflation sensitivity among the plurality of deflation sensitivities corresponding to the plurality of tire types. Therefore, compared to a configuration in which a new threshold value is set based on a smaller deflation sensitivity, it is possible to inhibit the pneumatic tire from being determined to have become deflated even if the air pressure is within a normal range.

A disclosure item (6) is a tire deflation determination method executed by one or more processor, the tire deflation determination method including: a first acquisition step of acquiring a rotation speed of each pneumatic tire mounted on a vehicle; a second acquisition step of acquiring a resonance frequency of the pneumatic tire, based on the rotation speed acquired by the first acquisition step; a determination step of determining whether or not a difference between the resonance frequency acquired by the second acquisition step and a preset reference frequency exceeds a preset first determination value; and a change step of, if it is determined by the determination step that the difference between the resonance frequency and the reference frequency exceeds the first determination value, changing a set value used in a deflation determination process of determining whether or not the pneumatic tire has become deflated based on the rotation speed acquired by the first acquisition step.

With this method, as in the tire deflation determination system of the disclosure item (1), it is possible to suppress a decrease in the accuracy of determination as to deflation of the pneumatic tire due to change of the type of pneumatic tire.

A disclosure item (7) is a program for causing one or more processors to execute: a first acquisition step of acquiring a rotation speed of each pneumatic tire mounted on a vehicle; a second acquisition step of acquiring a resonance frequency of the pneumatic tire, based on the rotation speed acquired by the first acquisition step; a determination step of determining whether or not a difference between the resonance frequency acquired by the second acquisition step and a preset reference frequency exceeds a preset first determination value; and a change step of, if it is determined by the determination step that the difference between the resonance frequency and the reference frequency exceeds the first determination value, changing a set value used in a deflation determination process of determining whether or not the pneumatic tire has become deflated based on the rotation speed acquired by the first acquisition step.

With this program, as in the tire deflation determination system of the disclosure item (1), it is possible to suppress a decrease in the accuracy of determination as to deflation of the pneumatic tire due to change of the type of pneumatic tire.

The present disclosure may be directed to a computer-readable storage medium having the program of the disclosure item (7) stored non-temporarily therein.

## Claims

1. A tire deflation determination system (100A, 100B) comprising:
a first acquisition processing unit (51A, 51B) configured to acquire a rotation speed of each pneumatic tire (10) mounted on a vehicle (1A, 1B);
a second acquisition processing unit (54A, 54B) configured to acquire a resonance frequency of the pneumatic tire (10), based on the rotation speed acquired by the first acquisition processing unit (51A, 51B);
a determination processing unit (58A, 58B) configured to determine whether or not a difference between the resonance frequency acquired by the second acquisition processing unit (54A, 54B) and a preset reference frequency exceeds a preset first determination value; and
a change processing unit (59) configured to, if it is determined by the determination processing unit (58A, 58B) that the difference between the resonance frequency and the reference frequency exceeds the first determination value, change a set value used in a deflation determination process of determining whether or not the pneumatic tire (10) has become deflated based on the rotation speed acquired by the first acquisition processing unit (51A, 51B).

2. The tire deflation determination system (100A, 100B) according to claim 1, wherein
the first acquisition processing unit (51A, 51B) acquires the rotation speed when at least a predetermined specific operation is accepted,
when the specific operation is accepted, the second acquisition processing unit (54A, 54B) acquires the resonance frequency, based on the rotation speed acquired in response to the acceptance of the specific operation,
the tire deflation determination system (100A, 100B) further comprises an update processing unit (57) configured to update the reference frequency, based on the resonance frequency acquired in response to the acceptance of the specific operation, and
when the specific operation is accepted, the determination processing unit (58A, 58B) determines whether or not a difference between the reference frequency after update by the update processing unit (57) and the reference frequency before the update exceeds the first determination value.

3. The tire deflation determination system (100B) according to claim 1, wherein
the first acquisition processing unit (51B) acquires the rotation speed each time a predetermined acquisition timing arrives,
each time the acquisition timing arrives, the second acquisition processing unit (54B) acquires the resonance frequency, based on the rotation speed acquired in response to the arrival of the acquisition timing, and
if the resonance frequency acquired by the second acquisition processing unit (54B) at each acquisition timing has increased by more than a preset second determination value or has decreased by more than a preset third determination value, the determination processing unit (58B) determines whether or not a difference between the last acquired resonance frequency and the reference frequency exceeds the first determination value.

4. The tire deflation determination system (100A, 100B) according to any one of claims 1 to 3, further comprising a third acquisition processing unit (52) configured to acquire traveling status information regarding a traveling status of the vehicle (1A, 1B) at a time when the rotation speed is acquired by the first acquisition processing unit (51A, 51B), wherein
the second acquisition processing unit (54A, 54B) acquires the resonance frequency, based on the rotation speed that is determined to be appropriate based on the traveling status information acquired by the third acquisition processing unit (52) among the rotation speeds acquired by the first acquisition processing unit (51A, 51B).

5. The tire deflation determination system (100A, 100B) according to any one of claims 1 to 4, wherein
in the deflation determination process, if a difference between the resonance frequency based on the rotation speed acquired by the first acquisition processing unit (51A, 51B) and the reference frequency exceeds a preset threshold value, it is determined that the pneumatic tire (10) has become deflated,
the set value includes the threshold value, and
if it is determined by the determination processing unit (58A, 58B) that the difference between the resonance frequency and the reference frequency exceeds the first determination value, the change processing unit (59) changes the threshold value to a value based on a highest deflation sensitivity among a plurality of deflation sensitivities corresponding to a plurality of tire types.

6. A tire deflation determination method executed by one or more processors (21), the tire deflation determination method comprising:
a first acquisition step (S21, S22) of acquiring a rotation speed of each pneumatic tire (10) mounted on a vehicle (1A, 1B);
a second acquisition step (S25) of acquiring a resonance frequency of the pneumatic tire (10), based on the rotation speed acquired by the first acquisition step (S21, S22);
a determination step (S27) of determining whether or not a difference between the resonance frequency acquired by the second acquisition step (S25) and a preset reference frequency exceeds a preset first determination value; and
a change step (S28, S29) of, if it is determined by the determination step (S27) that the difference between the resonance frequency and the reference frequency exceeds the first determination value, changing a set value used in a deflation determination process of determining whether or not the pneumatic tire (10) has become deflated based on the rotation speed acquired by the first acquisition step (S21, S22).

7. A program for causing one or more processors (21) to execute:
a first acquisition step (S21, S22) of acquiring a rotation speed of each pneumatic tire (10) mounted on a vehicle (1A, 1B);
a second acquisition step (S25) of acquiring a resonance frequency of the pneumatic tire (10), based on the rotation speed acquired by the first acquisition step (S21, S22);
a determination step (S27) of determining whether or not a difference between the resonance frequency acquired by the second acquisition step (S25) and a preset reference frequency exceeds a preset first determination value; and
a change step (S28, S29) of, if it is determined by the determination step (S27) that the difference between the resonance frequency and the reference frequency exceeds the first determination value, changing a set value used in a deflation determination process of determining whether or not the pneumatic tire (10) has become deflated based on the rotation speed acquired by the first acquisition step (S21, S22).
